# EUROPEAN PATENT APPLICATION

(11) **EP 4 651 265 A1**
(43) Date of publication of application: **19.11.2025**
(21) Application number: 24880046.8
(22) Date of filing: 14.10.2024
(51) Int. Cl.: H01M 10/48, H01M 10/42, G01M 3/04, H01M 50/559, H01M 50/552, H01M 50/186

(54) **SECONDARY BATTERY**

(30) Priority: 16.10.2023 KR 20230137491
(71) Applicant: LG Energy Solution, Ltd., Seoul 07335 (KR)
(72) Inventor: CHAE, Sanghak, Daejeon 34122 (KR); WOO, Jae Young, Daejeon 34122 (KR)
(74) Representative: Goddar, Heinz J.
(86) International application number: PCT/KR2024/015473
(87) International publication number: WO 2025/084709

(57) **Abstract**

The present disclosure relates to a secondary battery including an electrode assembly made by winding a positive electrode, a separator, and a negative electrode, a battery casing having one surface with an opening, and the other surface having a through-hole, the battery casing having a space in which the electrode assembly is accommodated, an electrode terminal provided to be in contact with the electrode assembly and exposed to the outside through the through-hole, a gasket positioned between the battery casing and the electrode terminal, and a top cap coupled to the opening of one surface of the battery casing, in which first leak detection member is positioned on a surface of the gasket that faces the battery casing.

## Description

### [Technical Field]

This application claims priority to and the benefit of Korean Patent Application No. 10-2023-0137491 filed with the Korean Intellectual Property Office on October 16, 2023, the entire contents of which are incorporated herein by reference.

The present disclosure relates to a secondary battery.

### [Background Art]

In general, a secondary battery refers to a battery that may be charged and discharged, unlike a primary battery that cannot be charged. The secondary batteries are widely used in cutting-edge electronic device fields such as phones, laptop computers, and camcorders.

Cylindrical batteries, angular batteries, and pouch-type batteries are known as the types of unit secondary batteries. The cylindrical battery is made by interposing a separator, which is an insulator, between a positive electrode and a negative electrode, rolling the assembly of the separator, the positive electrode, and the negative electrode to form an electrode assembly in the form of a jelly roll, and inserting the electrode assembly into a battery housing. Further, electrode tabs having strip shapes may be connected to non-coated portions of the positive and negative electrodes, respectively. The electrode tab electrically connects the electrode assembly and an electrode terminal exposed to the outside. For reference, a positive electrode terminal is a cap of a sealing body configured to seal an opening port of the battery housing, and a negative electrode terminal is a battery housing. However, the cylindrical battery in the related art having the above-mentioned structure has a problem in that the electric current is concentrated on the electrode tabs having strip shapes and coupled to the non-coated portion of the positive electrode and/or the non-coated portion of the negative electrode, which increases resistance, generates a large amount of heat, and degrades current collecting efficiency.

Resistance and heat are less of issue with a small-scale cylindrical battery having a 1865 form factor (diameter: 18 mm, height: 65 mm) or a 2170 form factor (diameter: 21 mm, height: 70 mm). However, in case that the form factor is increased to apply the cylindrical battery to the electric vehicle, there may occur a problem in that the cylindrical battery ignites because of a large amount of heat generated around the electrode tab during a rapid charging process.

In order to solve the problem, there has been proposed a cylindrical battery (so-called a tab-less cylindrical battery) having a structure in which a non-coated portion of a positive electrode and a non-coated portion of a negative electrode are designed to be respectively positioned at upper and lower ends of a jelly-roll-type electrode assembly, and current collectors are welded to the non-coated portions to improve current collecting efficiency.

In the tab-less cylindrical battery, a through-hole is provided in one surface of a battery casing, an electrode terminal is inserted into the through-hole, and then the electrode terminal positioned in the battery casing is pressed and coupled. In this case, a gasket is positioned between the electrode terminal and the battery casing.

Further, in the tab-less cylindrical battery, an opening portion is provided in the other surface of the battery casing, a vent is inserted into the opening portion, and the vent is coupled to the opening portion by crimping the battery casing.

In the case of the tab-less cylindrical battery in the related art, there is a problem in that a leak of an electrolyte is likely to occur in case that tight attachment strength between the electrode terminal and the gasket deteriorates. In particular, there is a problem in that it is impossible to quickly detect whether the electrolyte leaks.

### [Detailed Description of the Disclosure]

### [Technical Problem]

The present disclosure has been made in an effort to provide a secondary battery capable of detecting, in real time, whether an electrolyte leaks.

### [Technical Solution]

One aspect of the present disclosure provides a secondary battery including: an electrode assembly made by winding a positive electrode, a separator, and a negative electrode; a battery casing having one surface with an opening, and the other surface having a through-hole, the battery casing having a space in which the electrode assembly is accommodated; an electrode terminal provided to be in contact with the electrode assembly and exposed to the outside through the through-hole; a gasket positioned between the battery casing and the electrode terminal; and a top cap coupled to the opening of one surface of the battery casing, in which first leak detection member is positioned on a surface of the gasket that faces the battery casing.

### [Advantageous Effects]

According to the secondary battery according to the aspect of the present disclosure, the leak detection member may be positioned to be in contact with the gasket positioned between the electrode terminal and the battery assembly, thereby detecting, in real time, whether the electrolyte in the secondary battery leaks.

### [Brief Description of Drawings]

FIG. 1 is a cross-sectional perspective view illustrating a secondary battery according to an aspect of the present disclosure.
FIG. 2 is an enlarged view of one side of the secondary battery including an electrode terminal according to the aspect of the present disclosure.
FIG. 3 is an enlarged view of one side of a secondary battery including an electrode terminal according to another aspect of the present disclosure.
FIG. 4 is an enlarged view of one side of a secondary battery including an electrode terminal according to still another aspect of the present disclosure.
FIG. 5 is an enlarged view of one side of a secondary battery including an electrode terminal according to yet another aspect of the present disclosure.
FIG. 6 is an exploded cross-sectional view illustrating an electrode terminal, a leak detection member, a gasket, and a battery casing according to another aspect of the present disclosure.
FIG. 7 is a perspective view illustrating a battery pack according to the aspect of the present disclosure.
FIG. 8 is a perspective view illustrating a transport means according to the aspect of the present disclosure.

### [Explanation of Reference Numerals and Symbols]

1: Secondary battery
2: Pack housing
3: Battery pack
100: Electrode assembly
200: Battery casing
210: Beading portion
220: Crimping portion
300: Top cap
300a: Venting portion
400: Electrode terminal
401: Outer flange portion
402: Inner flange portion
403: Protruding portion
410: Gasket
501: Leak detection material
502: Bonding material
510: First leak detection member
511: First insertion groove
520: Second leak detection member
521: Second insertion groove
C: Core part
V: Transport means
S: Insulator

### [Best Mode]

The detailed description of the present disclosure is provided to completely explain the present disclosure to a person with ordinary skill in the art. Throughout the specification, unless explicitly described to the contrary, when one component "comprises (includes)" another component or "characterized by" having a certain structure and a certain shape, this means that other components, structures, and shapes may be included without being excluded.

The present disclosure may be variously modified and may have various aspects, and specific aspects will be described in detail in the detailed description. However, the description of the aspects is not intended to limit the contents of the present disclosure, but it should be understood that the present disclosure is to cover all modifications, equivalents and alternatives falling within the spirit and technical scope of the present disclosure.

Hereinafter, the present disclosure will be described in detail with reference to the drawings. However, the drawings are intended to illustratively describe the present disclosure, and the scope of the present disclosure is not limited by the drawings.

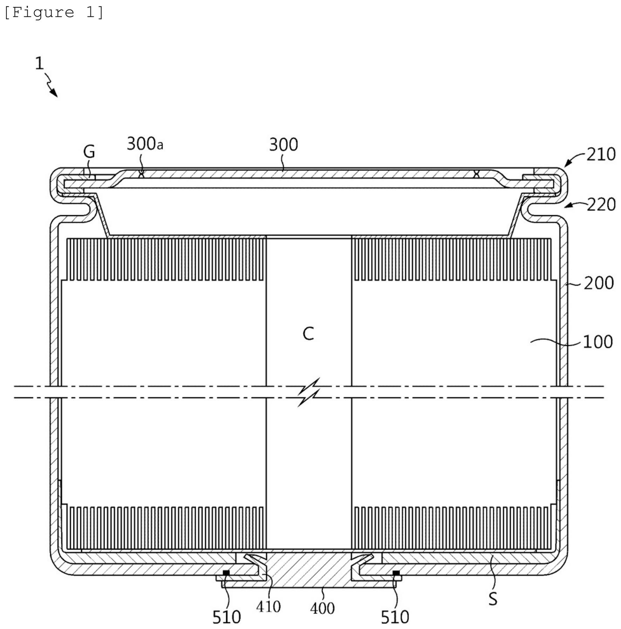

FIG. 1 is a cross-sectional perspective view illustrating a secondary battery 1 according to an aspect of the present disclosure.

The secondary battery 1 according to the present disclosure includes an electrode assembly 100, a battery casing 200, a top cap 300, an electrode terminal 400, a gasket 410, and leak detection members 510 and 520.

The electrode assembly 100 is a power generation element that may be charged and discharged and include a positive electrode, a negative electrode, and a separator. The electrode assembly 100 may have a jelly-roll structure in which the negative electrode, the separator, and the positive electrode are sequentially stacked and wound. Alternatively, the electrode assembly 100 may have a jelly-roll structure in which the negative electrode, the separator, the positive electrode, and the separator are sequentially stacked and wound.

The positive electrode may include a positive electrode current collector, a positive electrode active material portion, and a positive electrode non-coated portion. The positive electrode current collector may include a thin metal plate excellent in conductivity, e.g., an aluminum (Al) foil.

The positive electrode is made by coating any one of or both opposite surfaces of the positive electrode current collector with a positive electrode active material. A region in which the positive electrode active material is applied is the positive electrode active material portion, and a region in which no positive electrode active material is applied is the positive electrode non-coated portion.

The positive electrode active material may include lithium cobalt oxide having high working voltage and excellent capacity characteristics, lithium nickel oxide having high reversible capacity and used to easily implement a high-capacity battery, lithium nickel cobalt oxide made by substituting a part of nickel with cobalt, lithium nickel cobalt metal oxide made by substituting a part of nickel with manganese, cobalt, or aluminum, lithium manganese-based oxide having excellent thermal stability and made with low costs, and lithium iron phosphate having excellent stability.

The negative electrode may include a negative electrode current collector, a negative electrode active material portion, and a negative electrode non-coated portion. The negative electrode current collector may include a thin metal plate excellent in conductivity, e.g., a copper (Cu) or nickel (Ni) foil.

The negative electrode is made by coating one surface or two opposite surfaces of the negative electrode current collector with a negative electrode active material. The negative electrode active material portion is formed by being coated with a negative electrode active material or applying the negative electrode active material. The negative electrode non-coated portion is a region in which no negative electrode active material is applied or a region that is not coated with the negative electrode active material. The negative electrode non-coated portion is a region in which the negative electrode current collector is exposed.

For example, the negative electrode active material may be crystalline carbon, amorphous carbon, carbon composite, carbon material such as carbon fiber, lithium metal, lithium alloy, or the like. In this case, for example, the negative electrode active material may further include non-graphite-based SiO (silica), SiC (silicon carbide), or the like to design a high capacity.

The separator may serve to prevent an internal short circuit that may be caused by contact between the positive electrode and the negative electrode. The separator may include a porous material so that ions move smoothly between the electrodes.

In the aspect, the separator may include a base layer made of a porous material. For example, the base layer may include any one selected from a group consisting of polyethylene (PE), polystyrene (PS), polypropylene (PP), and a copolymer of polyethylene (PE) and polypropylene (PP).

In another aspect, the separator may include a safety reinforced separator (SRS). That is, the separator may include the base layer made of a porous material, and a coating layer made by coating the base layer with a slurry mixture made by mixing inorganic particles and binder polymer. In particular, the coating layer has a porous structure including ceramic particles and included in a base of the separator and has a uniform porous structure formed by empty spaces (interstitial volume) between the ceramic particles which are components of the active layer.

The coating layer may include ceramic particles including at least one selected from a group consisting of alumina, silica, TiO₂, SiC, and MgAl₂O₄. The coating layer included as described above may improve the safety of the electrode assembly. Further, the coating layer may further include lithium salt.

In the electrode assembly 100 according to the present disclosure, the positive electrode non-coated portion and the negative electrode non-coated portion may be provided in a long direction of the positive electrode current collector and the negative electrode current collector. Further, the positive electrode non-coated portion and the negative electrode non-coated portion may be positioned at two opposite ends based on a short direction of the positive electrode current collector and the negative electrode current collector.

Further, at least a part of the positive electrode non-coated portion and at least a part of the negative electrode non-coated portion may include a plurality of segmental pieces segmented in a winding direction of the electrode assembly 100. The plurality of segmental pieces may be bent in a direction in which a core part of the electrode assembly 100 is positioned. The plurality of bent segmental pieces may be superimposed in several layers. In this case, the first current collector and the second current collector may be coupled to a region in which the plurality of segmental pieces is superimposed in several layers.

The battery casing 200 may have a column structure having a space therein. The internal space of the battery casing 200 may accommodate an electrolyte (not illustrated) and the electrode assembly 100 including the electrodes and the separator.

The battery casing 200 may have a structure (sealing part) in which one side is opened, and the other side is sealed except for a through-hole formed at a center thereof.

One side and the other side of the battery casing 200 refer to ends positioned at upper and lower sides based on a height direction of the electrode assembly 100 or the secondary battery 1.

A beading portion 210 may be provided at one opened side of the battery casing 200 and folded in a direction toward a center of the secondary battery 1. Further, a crimping portion 220 may be provided between the beading portion 210 and the opening of the battery casing 200.

The battery casing 200 may be made of a lightweight conductive metallic material such as aluminum or aluminum alloy.

The electrode terminal 400 may be coupled to the through-hole provided at the other side of the battery casing 200 of the secondary battery 1. For example, the electrode terminal 400 may be fixed onto an inner surface of a closed portion of the battery casing 200 by riveting.

Specifically, the electrode terminal 400 may be provided in a column shape or a 'T' shape having a cross-section corresponding to the through-hole. In case that the electrode terminal 400 has a 'T' shape, a portion having a large perimeter is a head, and a portion opposite to the head is a tail in a top plan view. The head of the electrode terminal 400 may be in contact with an outer surface of the battery casing 200. The tail may be bent by a force applied toward the electrode casing 200, the through-hole, or the head of the electrode terminal 400, such that the tail may be in contact with the inner surface of the battery casing 200. In this case, the head of the electrode terminal 400 is an outer flange portion 401, and the tail of the electrode terminal 400 is an inner flange portion 402.

Further, the gasket 410 may be positioned between the electrode terminal and an outer diameter of the through-hole of the battery casing 200. The gasket 410 includes fluorine resin. The fluorine resin may be made of polymer resin having insulation and/or elasticity. For example, the fluorine resin may include one selected from a group consisting of perfluoroalkoxy (PFA) and polytetrafluoroethylene (PTFE). However, the present disclosure is not limited thereto.

The battery casing 200 and the top cap 300 have the same polarity, and the electrode terminal 400 has a polarity different from those of the battery casing 200 and the top cap 300. For example, when the electrode terminal 400 is a positive electrode, the battery casing 200 and the top cap 300 may be negative electrodes.

The top cap 300 may be coupled to a lower portion of the battery casing 200. In other words, the top cap 300 may be positioned at one side of the battery casing 200 having the opening portion, and the top cap 300 may be coupled to the battery casing.

The top cap 300 may have a venting portion 300a that prevents internal pressure from increasing and exceeding a preset numerical value because of a gas produced in the battery casing 200. Specifically, the top cap 300 may include a protruding portion (not illustrated), a rim portion (not illustrated), and the venting portion 300a. The venting portion 300a may be positioned between the protruding portion and the rim portion.

The venting portion 300a refers to a region having a smaller thickness than a peripheral region of the top cap 300. The venting portion 300a is structurally weak in comparison with the peripheral region. Therefore, when an abnormality occurs on the cylindrical secondary battery and an internal pressure in the battery casing 200 increases to a predetermined level or higher, the venting portion 300a is fractured, and the gas produced in the battery casing 200 may be discharged to the outside.

For example, the venting portion 300a may be formed by partially reducing a thickness of the top cap 300 by notching any one surface or two opposite surfaces of the top cap 300.

The first leak detection member 510 according to the present disclosure may be positioned between the battery casing 200 and the gasket 410 and detect a leak of the electrolyte through a gap when the gap is formed because a close-contact force between the gasket 410 and the battery casing 200 decreases.

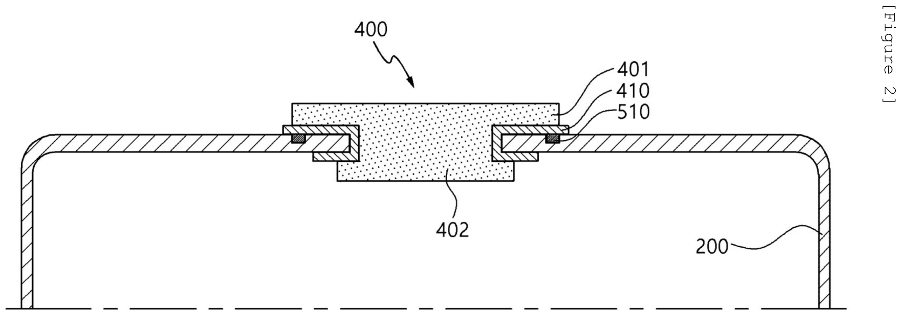

FIG. 2 is an enlarged view of one side of the secondary battery 1 including the electrode terminal 400 according to the aspect of the present disclosure.

The first leak detection member 510 may be positioned outside the battery casing 200 and configured to detect whether the electrolyte leaks to the outside. Specifically, the first leak detection member 510 may be positioned on the outer surface of the battery casing 200 that faces the outer flange portion 401.

The first leak detection member 510 includes a leak detection material 501 configured to detect a leak of the electrolyte passing through the gasket 410 and the battery casing 200. When the leak detection material 501 comes into contact with the electrolyte, the leak detection material 501 changes in color because of a change in concentration, such that it is possible to identify, in real time, whether the electrolyte leaks between the electrode terminal 400 and the gasket 410.

In the aspect, the leak detection material 501 may include any one of thymol blue, thymolphthalein, methyl orange, methyl red, and phenol red.

Further, the first leak detection member 510 may include a bonding material 502 that bonds and fixes the leak detection material 501 to the battery casing 200. Alternatively, the leak detection material 501 may be fixed to the battery casing 200 by thermal bonding.

The first leak detection member 510 may include the leak detection material 501 and the bonding material 502. The bonding material 502 may include any one of acrylic copolymer and epoxy resin, for example.

Alternatively, in case that the leak detection material 501 is fixed to the battery casing 200 by thermal bonding, the first leak detection member 510 may not include the bonding material 502, and the secondary battery 1 may be integrally and thermally bonded by being heated to a preset temperature and stably melted, such that the tight attachment strength between the gasket 410 and the battery casing 200 may increase.

Even though the first leak detection member 510 is positioned between the battery casing 200 and the gasket 410, the first leak detection member 510 does not affect the close-contact force between the battery casing 200 and the gasket 410 or may increase the close-contact force between the battery casing 200 and the gasket 410.

In the aspect, a first insertion groove 511 may be provided in a surface of the battery casing 200 that faces the gasket 410, and the first leak detection member 510 may be inserted and positioned into the first insertion groove 511.

Further, the first leak detection member 510 may be provided at the same height as the first insertion groove 511 or provided to be higher in height than the first insertion groove 511, such that the close-contact force between the battery casing 200 and the gasket 410 may increase.

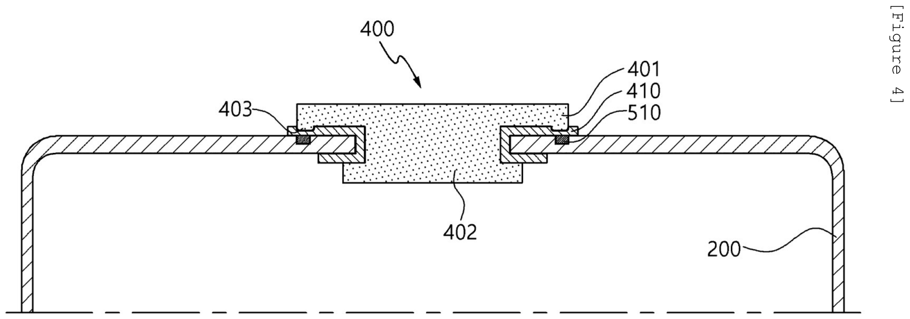

FIG. 4 is an enlarged view of one side of the secondary battery 1 including the electrode terminal 400 according to another aspect of the present disclosure.

The electrode terminal 400 may further include a protruding portion 403 provided at a position corresponding to the position at which the first leak detection member 510 is positioned, such that the close-contact force between the battery casing 200 and the gasket 410 may increase. That is, the first leak detection member 510 and the protruding portion 403 may press the gasket 410 from opposite sides, such that the close-contact force between the battery casing 200 and the gasket 410 may increase.

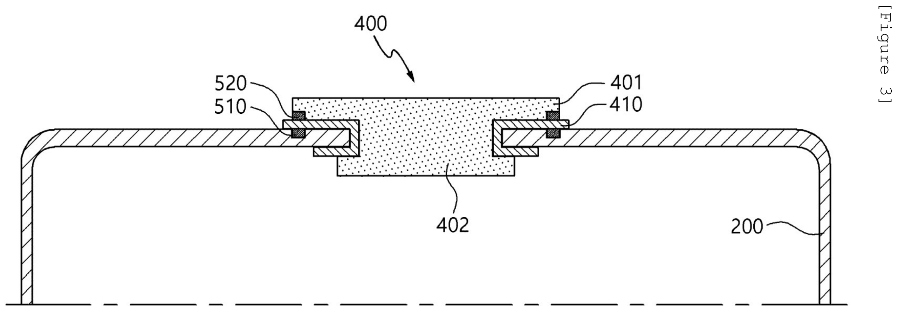

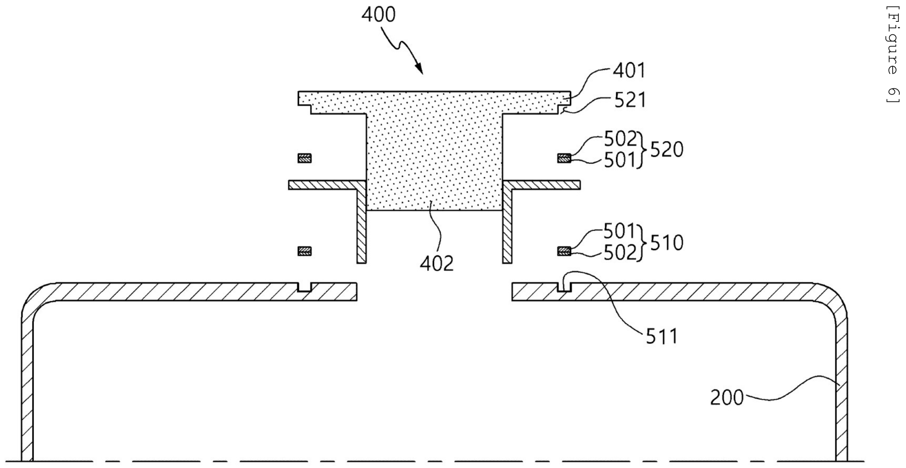

FIG. 3 is an enlarged view of one side of the secondary battery 1 including the electrode terminal 400 according to another aspect of the present disclosure, and FIG. 6 is an exploded cross-sectional view illustrating the electrode terminal 400, the leak detection members 510 and 520, the gasket 410, and the battery casing 200 according to another aspect of the present disclosure.

FIG. 3 is an enlarged view of one side of a secondary battery including an electrode terminal according to another aspect of the present disclosure.

With reference to FIG. 3, the secondary battery 1 according to another aspect of the present disclosure may further include the second leak detection member 520. The second leak detection member 520 may be positioned at a side at which the gasket 410 and the electrode terminal 400 face each other. Like the first leak detection member 510, the second leak detection member 520 may be positioned outside the battery casing 200 and configured to detect, in real time, whether the electrolyte leaks between the gasket 410 and the electrode terminal 400. Specifically, the second leak detection member 520 may be positioned on one surface of the outer flange portion 401 that faces the gasket 410.

Further, FIG. 6 is an exploded cross-sectional view illustrating the electrode terminal, the leak detection member, the gasket, and the battery casing according to another aspect of the present disclosure.

With reference to FIG. 6, like the first leak detection member 510, the second leak detection member 520 may include the leak detection material 501 and the bonding material 502.

A second insertion groove 521 may be provided in a surface of the electrode terminal 400 that faces the gasket 410, and the second leak detection member 520 may be inserted and positioned into the second insertion groove 521. Specifically, the second insertion groove 521 may be provided in the outer flange portion 401 of the electrode terminal.

The second leak detection member 520 may increase the close-contact force between the electrode terminal 400 and the gasket 410. The shape of the second leak detection member 520 is not specially limited.

For example, a height of the second leak detection member 520 of the second leak detection member 520 is higher than a height of the second insertion groove, such that the close-contact force between the electrode terminal 400 and the gasket 410 may increase. Alternatively, the first leak detection member 510 and the second leak detection member 520 are provided at the corresponding positions, which may increase the close-contact force.

Alternatively, in the secondary battery 1 according to the present disclosure, the protruding portion 403 is provided on the electrode terminal 400 at the position corresponding to the position of the first insertion groove 511 or the protruding portion is provided on a part of the electrode casing 200 being in contact with the gasket 540, such that the close-contact force between the electrode terminal 400, the gasket 410, and the battery casing 200 may increase.

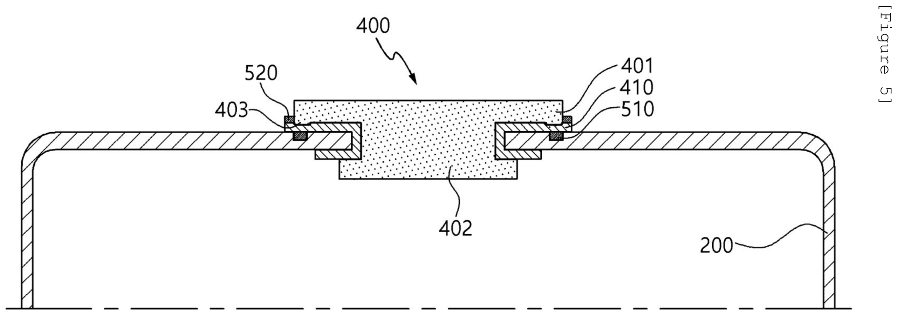

FIG. 5 is an enlarged view of one side of the secondary battery 1 including the electrode terminal 400 according to another aspect of the present disclosure.

In another aspect, the second leak detection member 520 may be positioned on a lateral surface of the electrode terminal 400. That is, the second leak detection member 520 is not positioned between the gasket 410 and the outer flange portion 401 but may be positioned on the surface of the gasket 410, which faces the outer flange portion 401, and positioned on the lateral surface of the outer flange portion 401.

In this case, the bonding material 502 of the second leak detection member 520 may be bonded to the lateral surface of the outer flange portion 401, and the leak detection material 501 may be positioned to protrude toward the gasket 410.

Further, according to another aspect, in the secondary battery 1, the protruding portion may be provided on one surface of the outer flange portion 401, which corresponds to the first leak detection member 520 and faces the gasket 410, in order to increase the close-contact force between the gasket 410, the electrode terminal 400, and the battery casing 200.

The aspect of the present disclosure provides a battery pack 3 including any one of the above-mentioned secondary batteries.

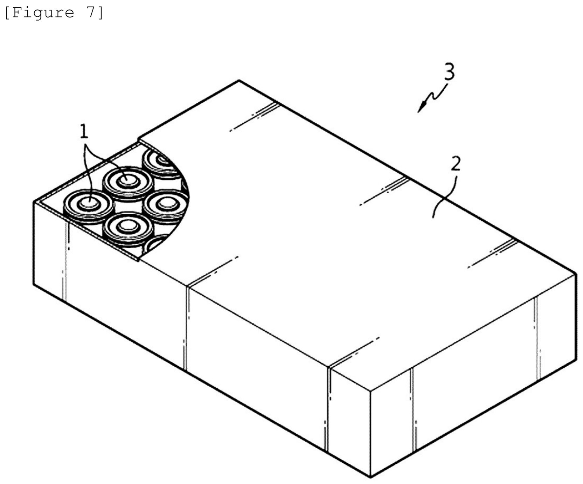

FIG. 7 related to the aspect illustrates a battery pack 3 including the secondary battery 1 provided in a pack housing 2.

The battery pack according to the aspect has a high output and a large capacity.

According to the aspect of the present disclosure, a transport means including the battery pack is provided.

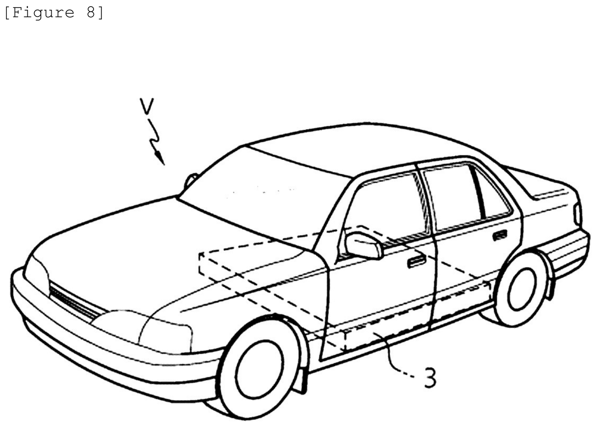

In the aspect, FIG. 8 illustrates a transport means V including the battery pack 3.

The transport means according to the aspect is excellent in stability and safety because the transport means uses the battery pack having a high output and a large capacity.

While the present disclosure has been described above with reference to the exemplary aspects, it may be understood by those skilled in the art that the present disclosure may be variously modified and changed without departing from the spirit and scope of the present disclosure disclosed in the claims.

## Claims

1. A secondary battery comprising:
an electrode assembly made by winding a positive electrode, a separator, and a negative electrode;
a battery casing having one surface with an opening, and the other surface having a through-hole, the battery casing having a space in which the electrode assembly is accommodated;
an electrode terminal provided to be in contact with the electrode assembly and exposed to the outside through the through-hole;
a gasket positioned between the battery casing and the electrode terminal; and
a top cap coupled to the opening of one surface of the battery casing,
wherein first leak detection member is positioned on a surface of the gasket that faces the battery casing.

2. The secondary battery of claim 1, wherein a first insertion groove is provided in a surface of the battery casing that faces the gasket, and the first leak detection member is inserted and positioned into the first insertion groove.

3. The secondary battery of claim 2, wherein a height of the first leak detection member is equal to or larger than a depth of the first insertion groove, and the first leak detection member increases a close-contact force between the battery casing and the gasket.

4. The secondary battery of claim 1, wherein the first leak detection member comprises a leak detection material configured to detect a leak of an electrolyte passing between the gasket and the battery casing.

5. The secondary battery of claim 4, wherein the first leak detection member comprises a bonding material configured to bond and fix the leak detection material to the battery casing, or the leak detection material is fixed to the battery casing by thermal bonding.

6. The secondary battery of claim 1, wherein the electrode terminal further comprises a protruding portion provided at a position corresponding to a position at which the first leak detection member is positioned, such that a close-contact force between the electrode terminal and the gasket increases.

7. The secondary battery of claim 1, wherein the electrode terminal comprises:
a body portion inserted into the through-hole;
an outer flange portion exposed to the outside through the through-hole and extending along the outer surface from a one side periphery of the body portion; and
an inner flange portion extending toward an inner surface of the battery casing from the other side periphery of the body portion, and
wherein the first leak detection member is positioned on the outer flange portion.

8. The secondary battery of claim 1, wherein a second leak detection member is positioned on a surface of the gasket that faces the electrode terminal.

9. The secondary battery of claim 8, wherein a second insertion groove is provided in a surface of the electrode terminal that faces the gasket, and the second leak detection member is inserted and positioned into the second insertion groove.

10. The secondary battery of claim 8, wherein the second leak detection member is positioned to be in contact with a lateral surface of the electrode terminal.

11. The secondary battery of claim 8, wherein the second leak detection member is positioned outside the battery casing.
